**Europäisches Patentamt**

(19) **European Patent Office**

**Office européen des brevets**

(11) Numéro de publication: **0 076 175**
**B1**

(12) # FASCICULE DE BREVET EUROPEEN

(45) Date de publication du fascicule du brevet:
03.10.84

(21) Numéro de dépôt: **82401294.2**

(22) Date de dépôt: **09.07.82**

(51) Int. Cl.³: **C 04 B 7/44**

(54) Procédé et appareil pour la calcination des matières minérales en poudre, notamment en cimenterie.

(30) Priorité: **28.09.81 FR 8118195**

(43) Date de publication de la demande:
**06.04.83 Bulletin 83/14**

(45) Mention de la délivrance du brevet:
**03.10.84 Bulletin 84/40**

(84) Etats contractants désignés:
**BE CH DE GB IT LI LU NL**

(56) Documents cités:
**DE - A - 3 012 167**

(73) Titulaire: **FIVES-CAIL BABCOCK, Société anonyme, 7 rue Montalivet, F-75383 Paris Cedex 08 (FR)**

(72) Inventeur: **Cosar, Paul, 48, rue du Montparnasse, F-75014 Paris (FR)**
Inventeur: **Henin, Jean-Pierre, 14, rue de la Concorde, F-59110 La Madeleine (FR)**

(74) Mandataire: **Fontanié, Etienne, FIVES-CAIL BABCOCK 7, rue Montalivet, F-75383 Paris Cedex 08 (FR)**

## Description

La présente invention concerne la calcination des matières minérales réduites en poudre avec utilisation d'un combustible solide.

Pour réaliser cette opération, on brûle généralement le combustible dans un foyer séparé pour produire des gaz chauds dans lesquels les matières à traiter sont mises en suspension. Si la température des gaz est trop élevée, ils risquent de provoquer un début de fusion des matières traitées qui forment alors des concrétions sur les parois du four et des gaines de sortie. Pour éviter cela, on peut diluer les gaz, par exemple par recyclage, mais on augmente alors le débit des gaz, ce qui conduit à des investissements plus importants. On a également proposé d'utiliser un gazogène produisant des gaz combustibles qui sont brûlés dans un four de calcination. Cette combustion produit généralement des gaz à haute température avec risque de fusion des particules de matières, comme dans la solution classique. Ces solutions présentent, par ailleurs, l'inconvénient de nécessiter deux appareils: une chambre de combustion ou un gazogène et un four de calcination.

Une autre solution consiste à réduire le combustible en poudre et à le mélanger aux matières à traiter au sein d'un lit fluidisé, les produits calcinés et les cendres étant évacués soit par débordement du lit, soit pneumatiquement dans le cas d'un lit fluidisé dilué. Cette solution présente deux inconvénients: elle nécessite un broyage poussé du combustible qui est coûteux, notamment lorsqu'il s'agit de déchets ou de sous-produits industriels difficiles à broyer, et elle ne permet pas de séparer les cendres du produit calciné, ce qui peut nuire à la qualité du produit obtenu, notamment en cimenterie.

Le but de la présente invention est de remédier aux inconvénients des solutions connues et de permettre l'utilisation, pour la calcination de matières minérales pulvérulentes, de combustibles solides très variés, y compris des combustibles très pauvres à haute teneur en cendres, avec une granulométrie relativement grossière (0-10 mm) et ne nécessitant pas, par conséquent, une préparation coûteuse.

Le procédé de calcination objet de l'invention consite à gazéifier un combustible solide dans un lit fluidisé pour produire un courant ascendant de gaz combustibles et à disperser les matières solides à calciner dans le courant de gaz combustibles, en les y injectant dans la partie supérieure d'une chambre contenant le lit fluidisé et au-dessus de ce dernier, au moyen d'un courant d'air ou d'un autre gaz comburant, la vitesse des gaz dans la zone d'injection des matières étant suffisante pour que celles-ci soient entraînées par les gaz et ne tombent pas dans le lit fluidisé.

Dans une application particulière de ce procédé à la calcination des matières premières pour la fabrication du clinker de ciment, les matières solides calcinées sont séparées des fumées produites par la combustion des gaz combustibles et de l'air ou du gaz comburant et sont introduites dans le four de clinkérisation, et les fumées sont utilisées pour préchauffer les matières premières.

L'appareil objet de l'invention permettant la mise en œuvre de ce procédé comprend une chambre dont le fond est constitué par une grille, des moyens pour insuffler de l'air dans la chambre à travers la grille, un dispositif d'alimentation en combustible dans la partie inférieure de la chambre et des moyens pour introduire les matières solides à calciner dans la partie supérieure de la chambre et les disperser dans celle-ci.

Le fond de la chambre est avantageusement constitué par une grille mobile inclinée ou comportant une portion avant inclinée de telle sorte que son extrémité avant soit située à un niveau supérieur à la surface libre du lit fluidisé. Cette disposition permet d'extraire facilement les cendres sans entraîner une proportion notable de matières combustibles.

Pour injecter les matières solides dans le courant des gaz combustibles, au-dessus du lit fluidisé, on peut utiliser une ou plusieurs rangées de buses régulièrement espacées sur tout le périmètre de la chambre ou seulement sur certains côtés.

Pour éviter que les matières solides à calciner ne tombent dans la partie inférieure de la chambre, celle-ci peut être séparée de la partie supérieure par une zone à section rétrécie.

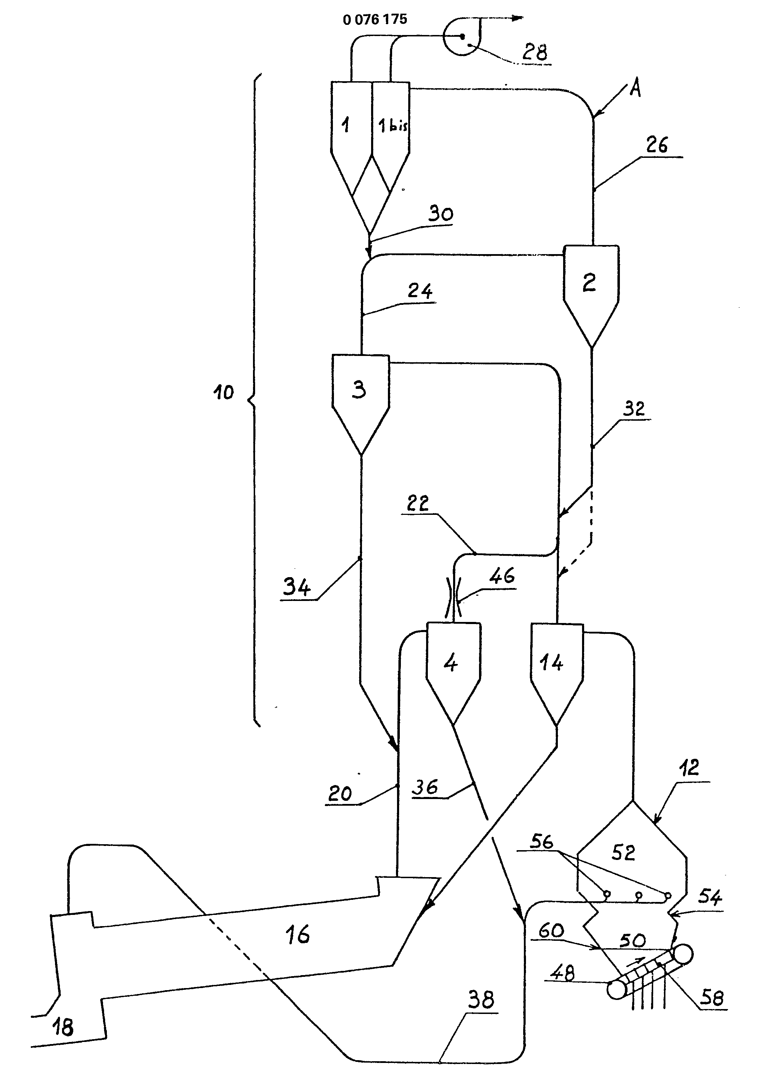

La description qui suit se réfère au dessin qui l'accompagne et montre, à titre d'exemple non limitatif, un mode de réalisation de l'invention. L'unique figure de ce dessin est le schéma d'une installation pour la fabrication du clinker de ciment comportant un appareil de calcination réalisé conformément à l'invention.

Cette installation est constituée essentiellement par un échangeur à cyclones 10, un four de calcination 12 auquel est associé un cyclone 14, un four de clinkérisation 16 et un refroidisseur de clinker 18.

L'échangeur 10 comporte quatre étages: l'étage supérieur est formé de deux cyclones 1-1bis en parallèle et les autres étages comprennent un seul cyclone 2, 3 et 4. L'entrée du cyclone inférieur 4 est reliée par une conduite 20 au capot des fumées du four 16 et la sortie des gaz de chaque cyclone est reliée à l'entrée du cyclone placé au-dessus par une conduite 22, 24 ou 26, de sorte que les fumées du four 16 passent successivement dans les cyclones 4, 3, 2 et 1-1bis et sont finalement rejetées dans l'atmosphère, après avoir été dépoussiérées, par un ventilateur de tirage 28. Des conduits 30, 32 et 34 pour l'évacuation des matières traitées sont raccordés à la pointe des cyclones 1-1bis, 2 et 3 et débouchent dans les conduites 24, 22 et 20, respectivement. Un conduit 36 raccordé à la pointe du cyclone 4 débouche dans une conduite 38 reliant le refroidisseur de clinker 18 au four de précalcination 12. Les matières premières introduites en A, sous forme finement divisée, dans la conduite 26 passent ainsi successivement dans les cyclones 1-1bis, 2, 3 et 4 en étant mises en suspension dans les fumées puis séparées de celles-ci dans les cyclones, de façon à réaliser un échange à contre-courant. Les matières séparées des fumées dans le cyclone 4 sont introduites dans la conduite 38 et transportées par l'air chaud qui y circule jusqu'au four de précalcination 12.

Le four de calcination 12 comporte une chambre dont le fond est constitué par le brin supérieur d'une grille sans fin 48 qui est mobile dans le sens de la flèche et qui est inclinée de sorte que son extrémité avant se trouve à un niveau supérieur à son extrémité arrière. La partie inférieure 50 de cette chambre est séparée de sa partie supérieure 52 par une zone à section rétrécie 54. Une rangée de buses 56 est montée dans la paroi du four 12, dans sa partie supérieure, à peu de distance au-dessus de la zone 54. Ces buses sont régulièrement espacées sur le périmètre de la chambre ou seulement sur ses parois longitudinales si la chambre a une section rectangulaire. Elles sont raccordées à la conduite 38 amenant l'air chaud du refroidisseur de clinker 18.

La structure de la partie inférieure du four 12 est analogue à celle d'un foyer à lit fluidisé du type faisant l'objet du brevet français N° 1440039. Des caissons de soufflage 58 alimentés en air sous pression éventuellement mélangé à des fumées recyclées sont placés sous le brin supérieur de la grille 48. Un dispositif d'alimentation en combustible 60 est prévu dans la partie inférieure du four au-dessus de la partie arrière de la grille. En fonctionnement, le débit du combustible et/ou le débit d'air alimentant les caissons 58 sont réglés automatiquement de façon à maintenir la surface supérieure du lit de combustible fluidisé à un niveau inférieur à celui de l'extrémité avant de la grille 48.

Les cendres produites par la combustion du combustible dans le lit fluidisé sont extraites du lit par la grille 48.

Le débit d'air alimentant les caissons 58 est insuffisant pour assurer la combustion complète des matières combustibles, de sorte que les gaz s'échappant du lit fluidisé sont réducteurs. Au niveau des buses 56, ces gaz se mélangent à l'air injecté par celles-ci et contenant en suspension les matières à calciner provenant du cyclone 4 de l'échangeur 10. Ce mélange est très homogène grâce à la distribution uniforme de l'air dans toute la section de la chambre de calcination, et les matières qui sont dispersées dans ces gaz sont de ce fait rapidement calcinées, grâce à la chaleur produite par la combustion dudit mélange, sans risque de fusion ou de ramollissement. La vitesse des gaz au niveau de l'injection des matières est suffisamment élevée pour que celles-ci soient entraînées et ne tombent pas dans le lit fluidisé. Le rétrécissement de la chambre dans la zone 54 contribue à ce résultat.

Les fumées produites par la combustion et les matières au moins partiellement décarbonatées sortent du four 12, par son extrémité supérieure, et entrent dans le cyclone 14 où les matières sont séparées des fumées pour être introduites dans le four de clinkérisation 16. Les fumées du four 12 sont mélangées aux fumées du four 16 à la sortie du cyclone 4.

Un rétrécissement de section 46 est prévu sur la conduite 22, en aval du cyclone 4, pour égaliser les pertes de charge sur les deux circuits: four 16, conduite 20 et cyclone 4, d'une part, et conduite 38, four 12 et cyclone 14, d'autre part, et obtenir la répartition voulue entre les fours 12 et 16 des débits d'air en provenance du refroidisseur de clinker 18.

## Revendications

1. Procédé de calcination de matières solides pulvérulentes consistant à gazéifier un combustible solide dans un lit fluidisé pour produire un courant ascendant de gaz combustibles, à disperser les matières solides à calciner dans le courant de gaz combustibles, en les y injectant dans la partie supérieure d'une chambre contenant le lit fluidisé et au-dessus de ce dernier au moyen d'un courant d'air ou d'un autre gaz comburant, la vitesse des gaz dans la zone d'injection des matières étant suffisante pour que celles-ci soient entraînées par les gaz et ne tombent pas dans le lit fluidisé.

2. Application à la fabrication du clinker de ciment du procédé de calcination selon la revendication 1, les matières solides calcinées étant séparées des fumées produites par la combustion des gaz combustibles et de l'air ou du gaz comburant et étant introduites dans le four de clinkérisation, et les fumées étant utilisées pour préchauffer les matières premières.

3. Appareil pour la calcination de matières solides pulvérulentes comportant une chambre dont le fond est constitué par une grille (48), un dispositif d'alimentation en combustible solide (60), des moyens (58) pour insuffler de l'air dans la chambre à travers ladite grille pour former sur la grille un lit fluidisé de combustible et pour assurer la combustion de ce dernier, caractérisé en ce qu'il comporte dans la partie supérieure (52) de ladite chambre des moyens (56) pour y injecter les matières solides à calciner en suspension dans un courant de gaz.

4. Appareil de calcination selon la revendication 3, caractérisé en ce que la partie supérieure (52) de ladite chambre est séparée de sa partie inférieure (50) par une zone à section rétrécie (54).

5. Appareil de calcination selon l'une des revendications 3 ou 4, caractérisé en ce que la grille (48) constituant le fond de la chambre est inclinée ou comporte une portion avant inclinée et est mobile, et des moyens de réglage du débit d'air insufflé sous la grille et/ou du débit de combustible sont prévus pour maintenir la surface libre du lit fluidisé au-dessous du niveau de l'extrémité avant de la grille.

6. Appareil de calcination selon l'une des revendications 3, 4 ou 5, caractérisé en ce que les moyens pour injecter les matières solides dans la partie supérieure de la chambre sont constitués par des buses (56) régulièrement espacées sur le périmètre de la chambre ou seulement sur certains de ses côtés.

## Patentansprüche

1. Verfahren zum Brennen pulverförmiger Feststoffe, das darin besteht, einen festen Brennstoff in einem Wirbelbett zu vergasen, um einen aufsteigenden Strom brennbarer Gase zu erzeugen, die zu brennenden Feststoffe in dem Strom brennbarer Gase dadurch zu verteilen, dass sie mit Hilfe eines Luftstroms oder eines anderen Gases als Sauerstoffträger in den oberen Teil einer das Wirbelbett enthaltenden Kammer gespritzt werden, wobei die Gase im Einspritzbereich der Feststoffe eine für die Mitnahme der Feststoffe ausreichende Geschwindigkeit haben, so dass dieselben nicht in das Wirbelbett fallen.

2. Anwendung des Brennverfahrens gemäss Anspruch 1 für die Herstellung von Zementklinker, wobei die gebrannten Feststoffe von den durch die Verbrennung der brennbaren Gase und der Luft oder des sauerstofftragenden Gases entstandenen Rauchgase getrennt und in den Klinkerofen eingeführt und die Rauchgase zum Vorwärmen der Rohstoffe verwendet werden.

3. Gerät zum Brennen pulverförmiger Feststoffe mit einer Kammer, deren Boden aus einem Gitter (48) gebildet wird, einer Aufgabevorrichtung des festen Brennstoffes (60), Mitteln (58) zum Einblasen der Luft durch das Gitter, um auf demselben ein Brennstoffwirbelbett zu bilden und die Verbrennung des Brennstoffes zu gewährleisten, dadurch gekennzeichnet, dass es im oberen Teil (52) der Kammer Mittel (56) für die Einspritzung der in einem Gasstrom schwebenden zu brennenden Feststoffe besitzt.

4. Gerät zum Brennen gemäss Anspruch 3, dadurch gekennzeichnet, dass der obere Teil (52) der Kammer von seinem unteren Teil (50) durch eine Zone mit verengtem Querschnitt (54) getrennt ist.

5. Gerät zum Brennen gemäss einem der Ansprüche 3 oder 4, dadurch gekennzeichnet, dass das den Boden der Kammer bildende Gitter (48) geneigt ist oder ein geneigtes Vorderteil besitzt und beweglich ist und Mittel für die Einstellung des Durchsatzes der unter dem Gitter eingeblasenen Luft und/oder des Brennstoff Durchsatzes vorgesehen sind, um die freie Fläche vom Wirbelbett unter dem Niveau des vorderen Gitterendes aufrechtzuerhalten.

6. Gerät zum Brennen gemäss einem der Ansprüche 3, 4 oder 5, dadurch gekennzeichnet, dass die Mittel zum Einspritzen der Feststoffe in den oberen Teil der Kammer aus Düsen (56) bestehen, die abstandsgleich an allen Wänden der Kammer oder nur an einigen von ihnen angeordnet sind.

## Claims

1. A method for the calcination of solid materials in powder form consisting in gasifying a solid fuel in a fluidized bed to produce an ascending current of combustible gases, dispersing the solid materials to be calcined in the current of combustible gases, by injecting them thereinto in the upper part of a chamber containing the fluidized bed and above the latter, by means of a current of air or of another oxidizing gas, the velocity of the gases in the zone in which the materials are injected being sufficient for these to be entrained by the gases and not fall into the fluidized bed.

2. Application of the calcination method according to Claim 1 to the production of cement clinker, the calcined solid materials being separated from the fumes produced by the combustion of the combustible gases and the air or the oxidizing gas and being introduced into the rotary kiln, and the fumes being used for preheating the raw materials.

3. A plant for the calcination of solid materials in powder form comprising a chamber the bottom of which consists of a grid (48), a solid fuel feed device (60), means (58) for blowing air into the chamber through said grid to form on the grid a fluidized bed of fuel and burning the latter, characterized in that it comprises in the upper part (52) of said chamber means (56) for injecting into it the solid materials to be calcined in suspension in a current of gas.

4. Calcination plant according to Claim 3, characterized in that the upper part (52) of said chamber is separated from its lower part (50) by a narrow section zone (54).

5. Calcination plant acccording to Claim 3 or 4, characterized in that the grid (48) constituting the bottom of the chamber is inclined or comprises a forward portion that is inclined and movable, and means for adjusting the flow rate of the air blown in under the grid and/or the flow rate of the fuel are provided in order to maintain the free surface of the fluidized bed under the level of the front extremity of the grid.

6. Calcination plant according to Claims 3, 4 or 5, characterized in that the means for injecting the solid materials into the upper part of the chamber consists of nozzles (56) spaced evenly on the perimeter of the chamber or only on certain of its sides.